# EUROPEAN PATENT SPECIFICATION

(11) **EP 3 949 766 B1**
(45) Date of publication and mention of the grant of the patent: **10.05.2023**
(21) Application number: 20189393.0
(22) Date of filing: 04.08.2020
(51) Int. Cl.: A24F 40/46, A24F 40/57, A24F 40/42, A24F 40/40, F03G 7/06

(54) **AEROSOL GENERATION SYSTEM WITH THERMAL REGULATION MECHANISM**
AEROSOLERZEUGUNGSSYSTEM MIT WÄRMEREGULIERUNGSMECHANISMUS
SYSTÈME DE GÉNÉRATION D'AÉROSOL DOTÉ D'UN MÉCANISME DE RÉGULATION THERMIQUE

(43) Date of publication of application: 09.02.2022
(73) Proprietor: JT International SA, 1202 Geneva (CH)
(72) Inventor: WRIGHT, Alec, Guildford GU2 7SU Surrey (GB); ROGAN, Andrew Robert John, Moray IV36 2ZH (GB); HASEGAWA, Madoka, 1260 Nyon (CH)
(74) Representative: Karl, Christof

(56) References cited:
- WO-A1-2016/156213
- WO-A1-2017/179043
- WO-A1-2019/199074
- WO-A1-2019/238812
- US-A1- 2014 069 424

## Description

### FIELD OF INVENTION

The invention relates to an aerosol generation system comprising an aerosol generation device and a consumable for use with the aerosol generation device. In particular, the invention relates to an aerosol generation device comprising a heating element that is configured to be retracted from a heat transfer element of the consumable when the heating element is heated to or above a threshold temperature.

### TECHNICAL BACKGROUND

Common aerosol generation systems available on the market comprise a consumable with an aerosol generation substrate and an aerosol generation device for heating the aerosol generation substrate contained in the consumable. Some configurations of aerosol generation systems provide indirect heating of the aerosol generation substrate in the consumable by the aerosol generation device. Instead of directly heating the aerosol generation substrate contained in the consumable by a heating element of the aerosol generation device, the consumable is provided with a heat transfer element that is heated by the heating element when the consumable is in use with the aerosol generation device. The heat transfer element transfers the heat from the heating element to the aerosol generation substrate for generating an aerosol for consumption by a user.

WO 2017/179043 A1 discloses an aerosol generation device comprising a heat transfer element according to the preamble of claim 1.

Such a heating arrangement is advantageous because it aids in avoiding overheating of the aerosol generation substrate, and different configurations are employed for regulating and controlling the heating temperature of the aerosol generation substrate for preventing overheating. In some configurations, the heating temperature of the aerosol generation substrate is estimated based on the temperature of the heating element. These configuration are simple and responsive, but inaccurate. Other configurations employ a dedicated temperature sensor provided near the aerosol generation substrate to measure the heating temperature of the aerosol generation substrate. While these configuration afford a more accurate temperature measurement, due to the additional electronic components, temperature measurement is less responsive, and manufacturing is expensive.

Therefore, there is a need for an aerosol generation system that provides responsive, quick, and accurate control of the heating temperature of the aerosol generation substrate for preventing overheating of the aerosol generation substrate and that is simple and cost-efficient to manufacture.

### SUMMARY OF THE INVENTION

Some, or all of the above objectives are achieved by the invention as defined by the features of the independent claims. Preferred embodiments of the invention are defined by the features of the dependent claims.

A first aspect of the invention is an aerosol generation device for use with a consumable comprising a heat transfer element for heating an aerosol generation substrate and being attachable to the aerosol generation device. The aerosol generation device comprises a heating element for heating the heat transfer element of the consumable when the consumable is attached to the aerosol generation device, wherein the heating element is moveable relative to the heat transfer element when the consumable is attached to the aerosol generation device, and configured to be moved when its temperature is at or above a threshold temperature, whereby an area of a contact, which exists between the heating element and the heat transfer element when the consumable is attached to the aerosol generation device and the temperature of the heating element is below the threshold temperature, can be reduced, or the contact can be eliminated. Because the contact between the heating element and the heat transfer element can be reduced or eliminated when the heating element reaches the threshold temperature, heating of the heat transfer element is reduced or stopped, and the temperature of the heat transfer element and consequently the temperature of the aerosol generation substrate can be controlled to be below the threshold temperature to prevent overheating. This affords reliable, responsive, and accurate temperature control of the heat transfer element and the aerosol generation substrate without the need for additional electrical and electronic components that drive up the manufacturing complexity and costs.

According to a 2^{nd} aspect, in the preceding aspect, the heating element is configured to be moved to be retracted from the heat transfer element. Retracting the heating element allows the contact area between the heating element and the heat transfer element to be reduced, or the contact to be eliminated, in a predictable and well-defined manner.

According to a 3^{rd} aspect, in any one of the preceding aspects, the heating element is coupled to a support element that can be heated by the heating element.

According to a 4^{th} aspect, in the preceding aspect, the support element is configured to be deformed when the temperature of the heating element is at or above the threshold temperature whereby the heating element can be retracted from the heat transfer element. Deformation of the support element allows the contact area between the heating element and the heat transfer element to be reduced or the contact to be eliminated. Thus, the temperature of the heat transfer element can be controlled to be below the threshold temperature.

According to a 5^{th} aspect, in the preceding aspect, the support element is configured to be shortened in one dimension when the temperature of the heating element is at or above the threshold temperature. Shortening of the support element provides a uniform deformation of the support element for predictably and reliably retracting the heating element from the heat transfer element.

According to a 6^{th} aspect, in the preceding aspect, the support element is configured to be elastically deformed when the temperature of the heating element is at or above the threshold temperature and to be substantially reset to its original shape when the temperature of the heating element is at a temperature below the threshold temperature.

According to a 7^{th} aspect, in the preceding aspect, the support element is configured to be shortened in one dimension when the temperature of the heating element is at or above the threshold temperature and to be substantially reset to its original length by being lengthened when the temperature of the heating element is below the threshold temperature.

Resetting the support element to its original shape at a temperature below the threshold temperature allows the heating element to be repeatedly retracted from the heat transfer element to repeatedly control the temperature of the heat transfer element.

According to an 8^{th} aspect, in any one of the preceding aspects, the support element comprises or substantially consists of a material that exhibits a thermostatic behaviour. Materials with a thermostatic behaviour are suitable for controlling the temperature of the heat transfer element below the threshold temperature.

According to a 9^{th} aspect, in any one of the 3^{rd} to 5^{th} aspects, the support element comprises or substantially consists of a shape memory alloy (SMA) and the threshold temperature corresponds to the transformation temperature of the SMA.

According to a 10^{th} aspect, in the preceding aspect, the support element is configured to be deformed when its temperature is at or above the transformation temperature such that the heating element can be retracted from the heat transfer element. The 9^{th} and 10^{th} aspects are advantageous because SMAs are metal alloys that undergo a phase change when heated that allows them to be deformed when heated to a temperature at or above their transformation temperature. This makes them suitable as a material for the support element. Depending on the material, SMAs may exhibit a one-way memory effect or a two-way memory effect.

According to an 11^{th} aspect, in any one of the 9^{th} or 10^{th} aspects, the support element is configured to substantially remain in its deformed shaped once deformed even when its temperature is subsequently at a temperature below the transformation temperature. SMAs with a one-way memory effect are deformed when heated to and above the transformation temperature and do not reset to their original shape when subsequently cooled to a temperature below the transformation temperature. This allows SMAs to perform a fuse function that is triggered when the heat transfer element is heated to or above the well-defined transformation temperature.

According to a 12^{th} aspect, in any one of the 6^{th} or 7^{th} aspects, the support element comprises or substantially consists of a shape memory alloy (SMA) and the threshold temperature corresponds to the transformation temperature of the SMA.

According to a 13^{th} aspect, in the preceding aspect, the support element is configured to substantially be reset to its original shape when its temperature is subsequently ats a temperature below the transformation temperature. The 12^{th} and 13^{h} aspects are advantageous because SMAs with a two-way memory effect are deformed when heated to or above the transformation temperature and are reset to their original shape when their temperature is subsequently at a temperature below the transformation temperature. This allows the support element to perform a switch function for temperature control at a well-defined temperature.

According to a 14^{th} aspect, in the preceding aspect, if the support element is above a second threshold temperature that is higher than the transformation temperature, the support element is configured to substantially remain in its deformed shaped once deformed even when its temperature is subsequently at a temperature below the transformation temperature. Some SMAs exhibit a two-way memory effect when below the transformation temperature and exhibit a one-way memory effect when heated to or above a second threshold temperature that is above the transformation temperature. This allows the support element to perform both a switch function and a fuse function at respective well-defined temperatures.

According to a 15^{th} aspect, in any one of the 9^{th} to 14^{th} aspects, the SMA comprises or substantially consist of Cu-Al-Ni. Copper-Aluminum-Nickel (Cu-Al-Ni) is advantageous because it is cost-efficient to produce, can be configured to have a transformation temperature above 100 °C and has a small hysteresis

According to a 16^{th} aspect, in any one of the 3^{rd} to 8^{th} aspects, the support element comprises or substantially consists of a bimetallic material.

According to a 17^{th} aspect, in the preceding aspect, the support element is configured to deform as a function of the temperature of the heating element such that at or above the threshold temperature, the heating element is retracted from the heat transfer element. Bimetallic materials typically consist of two metal materials that are bonded together. Because the two materials exhibit different thermal expansion rates, the bimetallic material deforms when heated. Bimetallic materials are advantageous because their deformation can be used to retract the heating element from the heat transfer element. Additionally, since the deformation of bimetallic materials is a gradual and reversible process, using bi-metallic materials affords repeated greater control over the contact area between the heating element and the heat transfer element over a range of temperatures.

According to an 18^{th} aspect, in any one of the 16^{th} or 17^{th} aspects, the bimetallic material comprises or substantially consists of steel and copper, or steel and brass. Steel and copper or steel and brass are commonly available bimetallic materials and are cost-efficient during manufacture.

According to an 19^{th} aspect, in any one of the 3^{rd} or 17^{th} aspects, the heating element comprises or substantially consists of a magnetic material such that, when the heat transfer element of the consumable comprises or substantially consists of a magnetic material, an attractive magnetic force between the heating element and the heat transfer element may cause the contact between heating element and the heat transfer element to be established when the temperature of the heating element is below the threshold temperature. The attractive magnetic force between magnetic materials can be used for ensuring that the heating element and the heat transfer element remain in contact when the consumable is in use with the aerosol generation device. Utilizing a magnetic force is further advantageous because magnetic interactions are not subject to mechanical wear and tear that can occur with repeated use.

According to 20^{th} aspect, in the preceding aspect, the threshold temperature is the Curie temperature of the heating element, and the attractive magnetic force between the heating element and the heat transfer element is reduced or eliminated at or above the Curie temperature of the heating element such that the heating element is retracted from the heat transfer element. When a magnetic material is heated to or above its Curie temperature, the material may undergo a change in its magnetic properties. This is advantageous because the attractive magnetic force can be weakened or eliminated, and as a result the contact area between the heating element and the heat transfer element can be reduced or the contact can be eliminated. Therefore, the magnetic phase change at the Curie temperature can be reliably used to allow the heating element to perform a switch or fuse function at a well-defined temperature.

According to an 21^{st} aspect, in any one of the 19^{th} or 20^{th} aspects, the support element is configured to mechanically bias the heating element in a direction away from the heat transfer element. The mechanical bias allows the support element to retract the heating element from the heat transfer element when the attractive magnetic force between the heating element and the heat transfer element is reduced or eliminated.

According to a 22^{nd} aspect, in any one of the 3^{rd} to 21^{th} aspects, the support element comprises or consist of a spring shape or coil shape.

According to a 23^{rd} aspect, in any one of the preceding aspects, the heating element is an inductive coil configured for heating a heat transfer element that is a susceptor element. Such a configuration affords responsive and accurate heating of the heat transfer element by the heating element and thus responsive and accurate temperature control.

According to a 24^{th} aspect, in any one of the preceding aspects, the heating element is an electrical element and the aerosol generation device comprises an electrical power source for supplying power to the electrical heating element. In contrast to other power sources such as combustible power sources, electrical power sources are advantageous because they are reliable, predictable, easily exchangeable, rechargeable, and compact in size.

According to a 25^{th} aspect, in any one of the 3^{rd} to 24^{th} aspects, the support element moveably attaches the heating element to a housing of the aerosol generation device. This provides a well-defined movement of the heating element when the support element is shortened, lengthened or otherwise deformed.

A 26^{th} aspect of the invention is a consumable for use with and attachable to an aerosol generation device according the 19^{th} aspect, the consumable comprising an aerosol generation substrate and a heat transfer element that comprises or substantially consists of a magnetic material for heating the aerosol generation substrate, wherein the threshold temperature is the Curie temperature of the heating, and the attractive magnetic force between the heating element and the heat transfer element can be reduced or eliminated at or above the Curie temperature of the heating element such the heating element is retracted from the heat transfer element. The advantages of the 26^{th} aspect are analogous to the advantages of the 19^{th} aspect.

According to a 27^{th} aspect, in the preceding aspect, the aerosol generation substrate comprises a liquid or tobacco material.

A 28^{th} of the invention is an aerosol generation system comprising a consumable comprising an aerosol generation substrate and a heat transfer element configured for heating the aerosol generation substrate, and an aerosol generation device according to any one of the 1^{st} to 25^{th} aspects. The advantages of the 28^{th} aspect are analogous to the advantages of the 1^{st} to 25^{th} aspects.

A 29^{th} aspect of the invention is an aerosol generation system comprising a consumable according to any one of the 26^{th} or 27^{th} aspects, and an aerosol generation device according the 19^{th} aspect. The advantages of the 29^{th} aspect are analogous to the advantages of the 19^{th}, 26^{th} and 27^{th} aspects.

According to a 30^{th} aspect, in the preceding aspect, the aerosol generation substrate comprises a liquid or tobacco material.

According to a 31^{st} aspect, in any one of the 28^{th} to 30^{th} aspects, the aerosol generation system is an e-cigarette.

### BRIEF DESCRIPTION OF THE DRAWINGS

Fig. 1 shows a schematic illustration of an aerosol generation system comprising a consumable at a first temperature in use with an aerosol generation device according to embodiments of the present invention;
Fig. 2 shows a schematic illustration of an aerosol generation system comprising a consumable at a second temperature in use with an aerosol generation device according to embodiments of the present invention;
Fig. 3 shows a schematic illustration of an aerosol generation system comprising a consumable at a first temperature in use with an aerosol generation device according to embodiments of the present invention;
Fig. 4 shows a schematic illustration of an aerosol generation system comprising a consumable at a second temperature in use with an aerosol generation device according to embodiments of the present invention;

### DETALED DESCRIPTION OF PREFERRED EMBODIMENTS

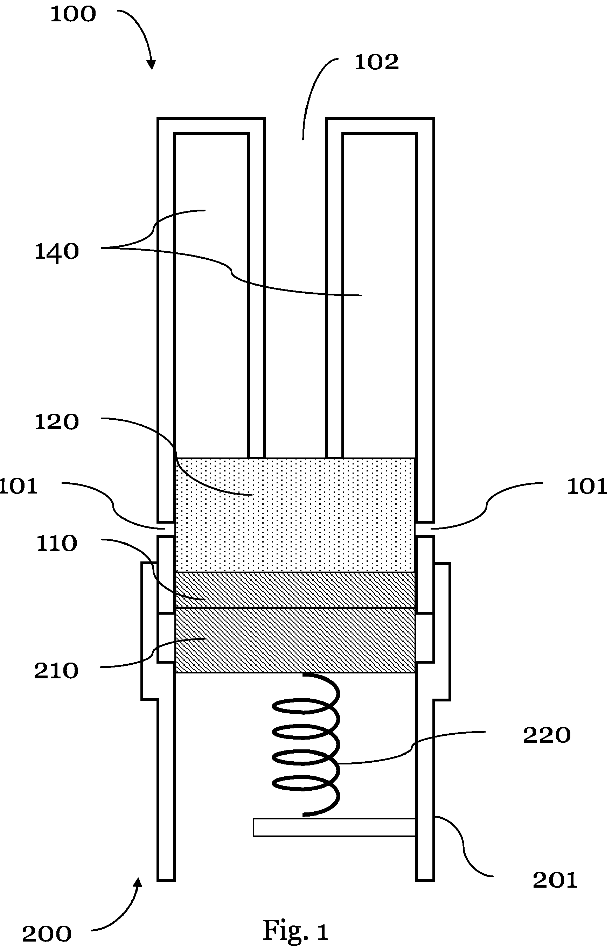

Fig. 1 shows a schematic illustration of an aerosol generation device 200 that comprises a heating element 210 and a consumable 100 comprising a heat transfer element 110 and an aerosol generation substrate 140 for use with the aerosol generation device 200.

The consumable 100 is connected, inserted, attached, or otherwise engaged with the aerosol generation device 200 for use. Such a connection may be achieved by any suitable connecting, attaching, or engaging means that may comprise press-fit connections, corresponding electrical connections, mutually engaging portions on the consumable 100 and the aerosol generation device, magnetic elements, or any other suitable connection. The consumable 100 comprises a heat transfer element 110 that is in contact with the heating element 210 when the consumable 100 is attached or connected with the aerosol generation device 200, and the heating element 210 can thus heat the heat transfer element 110. The contact area between the heat transfer element 110 and the heating element 210 should be sufficiently large to ensure that the heat transfer element can be sufficiently heated by the heating element 210. The consumable 100 comprises an aerosol generation substrate 140 that is configured to be or to come into contact with the heat transfer element 110 such that it can be heated by the heat transfer element 110 for generating an aerosol for consumption. The aerosol generation substrate 140 may be any appropriate substrate such as, for example, an e-liquid or a tobacco substrate. In case of an e-liquid, the consumable 100 is provided with a liquid storage that may be in direct communication with the heat transfer element 110. The consumable 100 may be provided with a sorption member 120 that is in contact with the heat transfer element 110 and in contact with the liquid storage. The heat transfer element 110 heats the liquid absorbed in the sorption member 120 for generating an aerosol for consumption by a user. The consumable 100 is provided with one or more air inlets 101 and an air outlet 102 that may be a mouthpiece or similar arrangement. The flow path of air from the one or more air inlets 101 to the air outlet 102 passes through or is in direct communication with the liquid storage and/or sorption member 120 to allow a generated aerosol to exit through the air outlet 102 for consumption by a user. Alternatively, the air outlet 102 may be provided with the aerosol generation device 200, and air flows from the one or more air inlets 101 to the air outlet 102 via an airflow path that is established when the consumable 100 is attached, connected, and/or in use with the aerosol generation device 200.

The heating element 210 of the aerosol generation device 200 may comprise an electrical heating element comprising a resistive heater, or any suitable heater type. The aerosol generation device 200 may be provided with a power source for providing power to the heating element 210. The power source may be an electrical power source such as a battery that may be exchangeable or rechargeable. The heating element 210 is configured to be moveable relative to the heat transfer element 110 and to be retracted from the heat transfer element 110 when the heating element 210 is heated to or above a threshold temperature. As a consequence, the contact area between the heating element 210 and the heat transfer element 110 is reduced or the contact is eliminated, and heating of the heat transfer element 110 by the heating element 210 is reduced or stopped. This prevents the temperature of the heat transfer element 110 and consequently of the aerosol generation substrate in the consumable 100 from being above the threshold temperature, and overheating of the consumable 100 can be prevented. Overheating may refer to heating the aerosol generation substrate to a too high temperature such that the generated aerosol is of an undesired or even harmful chemical composition. Overheating may also refer to heating the heating element and the heat transfer element to a too high temperature such that the aerosol generation device 200 or the consumable 100 may be damaged.

The heating element 210 may be connected or attached to a support element 220 that allows the heating element 210 to be moveable relative to the heat transfer element 110 of the consumable 100. Additionally, the support element 220 may be configured to moveably attach or connect the heating element 210 to the housing 201 of the aerosol generation device 200. The support element 220 is in direct contact with the heating element 210 and is heated by the heating element 210 such that the support element 220 and the heating element 210 have substantially the same temperature. When the heating element 210 and consequently the support element 220 is heated to or above a threshold temperature that depends on the material composition of the support element 220, the support element 220 is configured to be deformed such that the heating element 210 is retracted from the heat transfer element 110, and heating of the heat transfer element 110 by the heating element 210 is reduced or eliminated. This allows the support element 220 and the heating element 210 to perform a temperature control function that controls the temperature of the heat transfer element 110 and consequently the aerosol generation substrate 140 to be below the threshold temperature. The threshold temperature depends on the material composition of the support element 220 and is configured to be above a normal operating temperature or temperature range of the aerosol generation device 200 or the consumable 100, and below a too high temperature at which the aerosol generation device 200 or the consumable 100 and/or the aerosol generation substrate 140 is overheated. In general, the heating element 110 may be configured to have a threshold temperature in a range of 150°C to 350°C. This temperature range is preferable for an aerosol generation substrate that comprises a tobacco material. A threshold temperature within a temperature range of 150°C to 290°C is preferable for an aerosol generation substrate that comprises an e-liquid.

The support element 220 as illustrated in Fig. 1 is at a first temperature that may be an ambient temperature when the consumable is not in use or a temperature when the consumable is in use under normal operation conditions of the aerosol generation device 200 and the consumable 100, i.e. when aerosol is generated for consumption by a user without overheating. As exemplified in Fig. 1, the heating element 210 is in contact with the heat transfer element 110 with a contact area large enough for sufficiently heating the heat transfer element 110 for generating an aerosol.

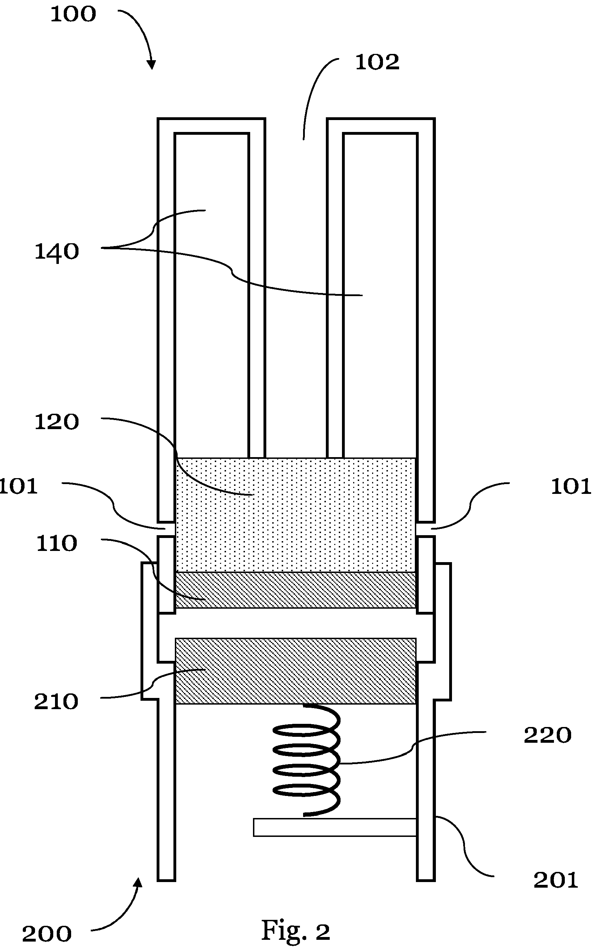

When the heating element 210, and consequently the support element 220, is heated to a temperature at or above a threshold temperature that depends on the material composition of the support element 220, the support element 220 is deformed such that the contact area of the contact between the heating element 210 and the heat transfer element 110 is reduced, or the contact is eliminated, as exemplified in Fig. 2. The support element 220 may comprise or consists of a spring or coil shape and may be shaped such that at least a portion of the heat transfer element 110 is in contact with the heating element 210 when the temperature of the support element 220 is below the threshold temperature. When the support element 220 is heated to a temperature at or above the threshold temperature, the support element 220 that comprises or consists of the spring or coil shape is deformed such that the spring or coil shape becomes at least partially shortened and/or compressed or otherwise deformed, and at least a portion of the heating element 210 is retracted from the heat transfer element 110. As a result, the contact area of the contact between the heating element 210 and the heat transfer element 110 is reduced, or the contact is eliminated. When the contact area between the heat transfer element 110 and the heating element 210 is reduced or the contact is eliminated when the support element 220 is at a temperature at or above the threshold temperature, the heating rate of the heat transfer element 110 due to heating by the heating element 210 is reduced or substantially eliminated, and the temperature of the heat transfer element 110 is prevented from further increasing. In this way, overheating of the consumable 100 can be prevented, and the temperature of the heat transfer element and consequently the temperature of the aerosol generation substrate can be controlled to be substantially below the threshold temperature.

The deformation of the support element 220 may be elastic, and consequently, when the temperature of the support element 220 is subsequently at a temperature below the threshold temperature, the support element 220 may be configured to be substantially reset to its original shape exemplified in Fig. 1, and the heat transfer element 110 is again in contact with the heating element 210. The support element 220 may therefore be configured to act as a temperature switch. Such a configuration may be preferred, for example, if preventing overheating of the aerosol generation substrate is desired. Alternatively, the support element 220 may be configured to not be substantially reset when its temperature is subsequently at a temperature below the threshold temperature, but is configured to remain deformed. Resetting of the support element 220 to its original shape in this case may require the application a mechanical force. The support element 220 may therefore be configured to act as a temperature fuse. Such a configuration may be preferred, for example, if preventing overheating of the consumable 100 and/or aerosol generation device 200 and preventing a potentially damaged consumable 100 and/or aerosol generation device 200 from being further used is desired.

Whether the support element 220 is configured to perform a switch function or a fuse function depends on the material composition of the support element 220. The support element 220 may comprise a material that allows the support element 220 to act in a thermostatic manner, i.e. to keep its temperature at or below a threshold temperature. Additionally, or alternatively, suitable materials for the support element 220 may comprise shape memory alloys (SMA), bimetallic materials, and magnetic materials with a well-defined Curie temperature.

Shape memory alloys are metal alloys that exhibit a shape memory effect. The memory effect can be a one-way memory effect or a two-way memory effect, i.e. they can "remember" one, or two preconfigured shapes to or between which they can transition when the SMA is heated to or above its transformation temperature. This memory effect is based on a phase transition of the metal alloy between a martensite phase and austenite phase with different respective crystal structures when heated to a temperature at or above the transformation temperature, and/or when cooled to a temperature below the transformation temperature. Depending on the temperature to which the SMA is heated, the phase transition may be reversible or may not be reversible. An advantage of SMAs is that the phase transition is fast and responsive as it is dependent on the temperature of the SMA, but - in contrast to most phase transitions - independent of time. Therefore, the phase transition of the SMA occurs at the transformation temperature. Referring to Figs. 1 and 2, the memory effect of an SMA can thus be utilized to allow the support element 220 to have a shape/length as exemplified in Fig. 1 when it is at a temperature below the transformation temperature of the SMA, and to be deformed to be shortened or compressed as exemplified in Fig. 2 when the support element 220 is heated to a temperature at or above the transformation temperature.

For an SMA that exhibits a two-way memory effect, the phase transition is reversible, and the SMA may be repeatedly cycled between two well-defined shapes based on its temperature and thus perform a temperature switch function. In this case, the support element 220 is configured such that the transformation temperature of the SMA is above the normal operating temperatures for generating an aerosol for consumption, and below a temperature at which the aerosol generation substrate and/or consumable and/or aerosol generation device is overheated. When the support element 220 is at a temperature below the transformation temperature, it is configured to have a first memorized shape/length as exemplified in Fig. 1 such that the heat transfer element 110 is in contact with the heating element 210. Once the support element 220 is heated to a temperature at or above the transformation temperature, the support element 220 is configured to be deformed to a second memorized shape/length as exemplified in Fig. 2 due to the above-mentioned phase transition, and as a result, at least a portion of the heating element 210 is retracted from the heat transfer element 110, and the contact area between the heat transfer element 110 and the heating element 210 is reduced or the contact is eliminated. It should be noted that the cycling - the repeated transition between the two memorized shapes - may be subject to hysteresis, i.e. the transformation temperature at or above which the support element 220 is deformed to the second memorized shape/length is different and typically higher than the temperature below which the support element 220 is reset to the first memorized shape/length.

For an SMA that exhibits a one-way memory effect, the phase transition is irreversible, and the SMA may be deformed to a memorized shape once when heated to or above the transformation temperature, and remains deformed in the memorized shape even when its temperature is subsequently at a temperature below the transformation temperature. Thus, the support element 220 may perform a fuse function, and the support element 220 is configured such that the transformation temperature is above the normal operating temperatures for generating an aerosol for consumption and below a temperature at which the aerosol generation substrate and/or consumable and/or aerosol generation device is overheated. When support element 220 is at a temperature below the transformation temperature, it is configured to have a shape/length that is preconfigured as exemplified in Fig. 1 such that the heat transfer element 110 is in contact with the heating element 210. Here, the preconfigured shape/length is not a memorized shape/length but may be achieved during the manufacturing process. When the support element 220 is heated to a temperature at or above the transformation temperature, the support element 220 is deformed to a memorized shape/length as exemplified in Fig. 2 due to the above-mentioned non-reversible phase transition, and as a result, at least a portion of the heating element 210 is retracted from the heat transfer element 110, and the contact area between the heat transfer element 110 and the heating element 210 is reduced or the contact is eliminated, and overheating is prevented. Resetting the support element 220 to its original shape/length exemplified in Fig. 1 may require application of a mechanical force.

SMA materials may exhibit a one-way memory effect at a first transformation temperature, and a two-way memory effect at a second transformation temperature, wherein the first transformation temperature is different from the second transformation temperature. For example, Cu-Al-Ni is a commonly available SMA that can be configured to have the second transformation temperature at, for example, around 150°C and to have the first transformation temperature at, for example, around 200°C. Therefore, a support element 220 comprising Cu-Al-Ni can perform a switch function when it is heated to a temperature to and above the second transformation temperature and below the first transformation temperature, and perform a fuse function when it is heated to a temperature at or above the first transformation temperature. Cu-Al-Ni is a preferable over other SMAs due to its lower production cost, small hysteresis and high transformation temperature that can be changed by changing the Al or Ni content in the alloy during production.

Alternatively, the support element 220 may comprise or consist of a bimetallic material. Bimetallic materials typically consist of two different metal materials with different thermal expansion rates that are bonded together. Due to the different thermal expansion rates, when the bimetallic material is heated, the material deforms, and when the bimetallic material is cooled, the material substantially resets to its original shape. In comparison to SMAs, the deformation does not occur at a predetermined transformation temperature. Since the deformation is based on the thermal expansion of the bimetallic material, the deformation is a gradual process that occurs over a temperature range. A support element 220 comprising or consisting of a bimetallic material may be configured to have a shape/length at a first temperature as exemplified in Fig. 1 such that the heating element 210 and the heat transfer element 110 have a contact area large enough for the heat transfer element 110 to be sufficiently heated by the heating element 210. The first temperature is preferably within a temperature range for normal operation of the consumable 100 with the aerosol generation device for generating an aerosol for consumption. When the support element 220 is heated and its temperature increases, due to different thermal expansion rates, the support element 220 gradually deforms to gradually become shortened or otherwise deformed. For example, when the temperature of the support element 220 increases from a first temperature to a higher temperature, the support element 220 may deform to a shape/length such that a portion of the heating element 210 is retracted from the heat transfer element 110 and the contact area between the heat transfer element 110 and heating element 210 is reduced. As a result, the heating rate of the heat transfer element 110 due to heating by the heating element 210 can be reduced or eliminated. When the support element 220 is heated to a second temperature, the heat transfer element 110 may gradually deform to a shape as exemplified in Fig. 2 such that the heating element 210 is retracted from the heat transfer element 110, and the contact between the heat transfer element 110 and the heating element 210 is eliminated. The second temperature thus corresponds to the threshold temperature. When the support element 220 subsequently gradually cools, the support element 220 gradually deforms to become lengthened or otherwise deformed and the heating element 210 is moved towards the heat transfer element 110 such that at a temperature below the threshold temperature, the heat transfer element 110 again is in contact with the heating element 210. Further cooling of the support element 220 leads to further lengthening of the support element 220, and the contact area between the heat transfer element 110 and heating element 210 is increased again. Therefore, the support element 220 performs a switching function based on its temperature. Additionally, the support element 220 performs a temperature regulating function of the heating rate of the heat transfer element 110 within a temperature range below the threshold temperature due to the gradual deformation of the support element 220 and retraction of the heating element 210 from the heat transfer element 110 based on the temperature of the support element 220. The bimetallic material may comprise or substantially consist of commonly available steel-copper or steel-brass materials or similar bimetallic compositions that have excellent corrosion resistance, mechanical stability, and low production costs.

Alternatively, when the heat transfer element 110 of the consumable comprises or consists of a magnetic material, the heating element 210 of the aerosol generation device 200 may comprise or consist of a magnetic material such that the heating element 210 and heat transfer element 110 exert an attractive magnetic force onto each other. The attractive magnetic force may cause the heat transfer element 110 and the heating element 210 to be in contact when the consumable is attached or connected and to the aerosol generation device. The magnetic material of the heat transfer element 110 and/or of the heating element 210 is a magnetic material with a respective Curie temperature at or above which the magnetic material undergoes a reversible phase change such that the magnetic properties of the magnetic material are reduced or eliminated, while below the Curie temperature the magnetic properties are retained. When the heat transfer element 110 or the heating element 210 is heated to a temperature at or above the Curie temperature, the attractive magnetic force that causes the heat transfer element 110 and heating element 210 to be in contact is reduced or eliminated, and as a result, the contact area between the heat transfer element 110 and heating element 210 is reduced or the contact is be eliminated, and overheating can be prevented. The Curie temperature is therefore the threshold temperature. The support element 220 may comprise or consist of a spring or coil shape that is configured such that the heating element 210 is mechanically biased in a direction away from the heat transfer element 110.

The heating element 210 and/or the heat transfer element 110 is configured such that its Curie temperature is above a normal operation temperature for generating an aerosol for consumption. When the heating element 210 and/or the heat transfer element 110 is at a temperature below the Curie temperature as exemplified in Fig. 1, the heat transfer element 110 and the heating element 210 are in contact with each other due to the attractive magnetic force that is larger than the force due to the spring or coil mechanical bias. When the heat transfer element 110 and/or the heating element 210 is heated to a temperature at or above the respective Curie temperature, the heat transfer element 110 and/or the heating element 210 at least partially loses its magnetic properties, and the attractive magnetic force between the heat transfer element 110 and heating element 210 is reduced or eliminated. Due to the heating element 210 being mechanically biased in a direction away from the heat transfer element 110, the heating element 210 is retracted from the heating element 210, as exemplified in Fig. 2. The contact area between the heat transfer element 110 and the heating element 210 is reduced or eliminated, and as a result, the heating rate of the heat transfer element 110 due to heating by the heating element 210 is reduced or eliminated, and overheating is prevented. When the temperature of the heat transfer element 110 and/or the heating element 210 is subsequently at a temperature below the Curie temperature, the magnetic material undergoes a reverse phase change, the magnetic properties are substantially restored, and the attractive magnetic force between the heat transfer element 110 and the heating element 210 is substantially restored. As a result, the support element 220 is reset to its original shape and the heating element 210 is moved to its original position as exemplified in Fig. 1. Therefore, the heating element 210 and or the heat transfer element 110 may perform a temperature switch function with the Curie temperature acting as the threshold temperature. The magnetic material may preferably comprise neodymium due to the strength of the magnetic properties of neodymium.

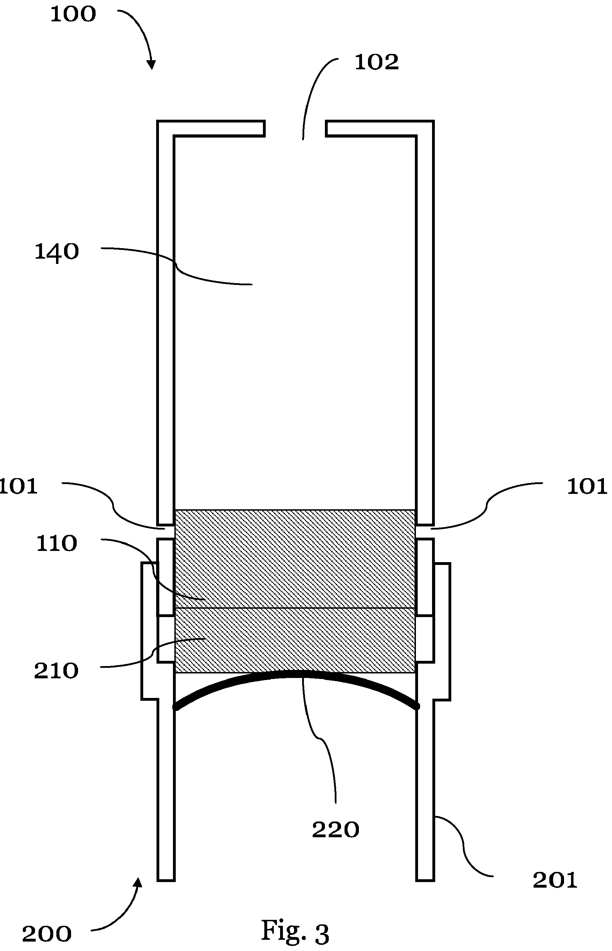

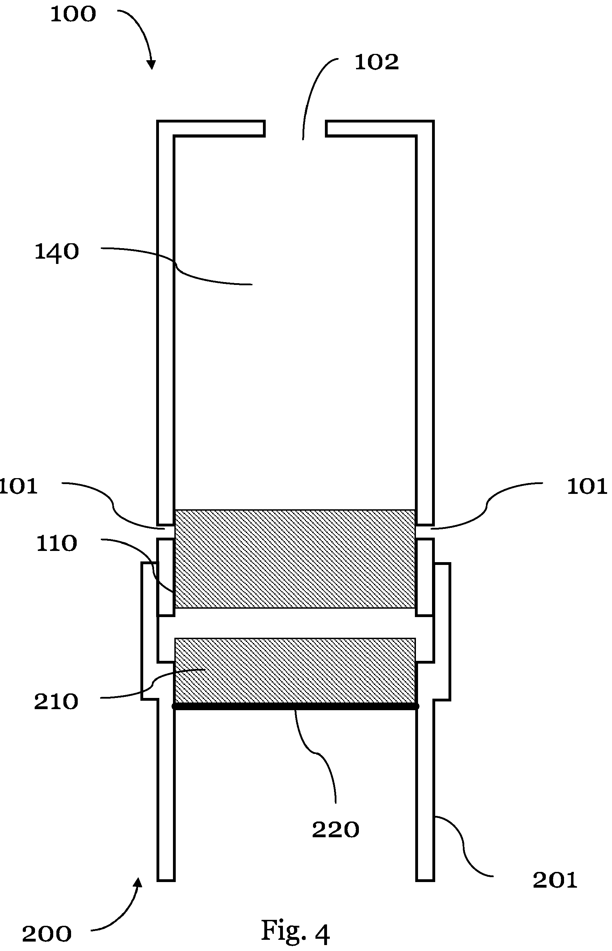

Figs. 3 and 4 show an aerosol generation device 200 and a consumable 100 in use with the aerosol generation device that may be an aerosol generation device 20 and a consumable 100 as described for embodiments in the context of Figs. 1 and 2, with modifications as detailed in the following. Instead of a spring or coil shape, the support element 220 may comprise or substantially consist of a strip or a membrane and may be curved or bent such that at least a portion of the heating element 210 is in contact with the heat transfer element 110 due to the bend or curvature of the support element 220 when the temperature of the support element 220 is below the threshold temperature. When the support element 220 is heated to a temperature at or above the threshold temperature, the support element 220 that comprises or consists of the strip or membrane is deformed such that the bent or curved strip or membrane becomes at least partially unbent or otherwise deformed and at least a portion of the heating element 210 is retracted from the heat transfer element 110. As a result, the contact area of the contact between the heating element 210 and the heat transfer element 110 is reduced, or the contact is eliminated. When the contact area between the heat transfer element 110 and the heating element 210 is reduced or the contact is eliminated when support element 220 is at a temperature at or above the threshold temperature, the heating rate of the heat transfer element 110 due to heating by the heating element 210 is reduced or substantially eliminated, and the temperature of the heat transfer element 110 is prevented from further increasing. Alternatively, in case of the heating element 210 and the heat transfer element comprise magnetic material as described on the context of Figs. 1 and 2, the support element 220 may comprise or substantially consist of a strip or a membrane and may be curved or bent such that the heating element 210 is mechanically biased in a direction away from the heat transfer element 110. In this way, the fuse function or switching function as described for embodiments in the context of Figs. 1 and 2 can be performed, and overheating of the consumable 100 and/or the aerosol generation device 200 and/or the aerosol generation substrate 140 can be prevented. Additionally, or alternatively, in the consumable 100 described for embodiments in the context of Figs. 1 and 2, the aerosol generation substrate 140 may comprise a tobacco substrate instead of an e-liquid. While this disclosure has described certain embodiments and generally associated methods, alterations and permutations of these embodiments and methods will be apparent to those skilled in the art without departing from the scope of the invention as defined by the appended claims.

### LIST OF REFERENCE SIGNS USED

- 100:: consumable
- 101:: air inlet
- 102:: air outlet
- 110:: heat transfer element
- 120:: sorption member
- 140:: aerosol generation substrate
- 200:: aerosol generation device
- 201:: device housing
- 210:: heating element
- 220:: support element

## Claims

1. An aerosol generation device (200) for use with a consumable (100) comprising a heat transfer element (110) for heating an aerosol generation substrate (140) and being attachable to the aerosol generation device, the aerosol generation device comprising:
a heating element (210) for heating the heat transfer element of the consumable when the consumable is attached to the aerosol generation device, **characterised in that**
the heating element is moveable relative to the heat transfer element when the consumable is attached to the aerosol generation device, and
configured to be moved when its temperature is above a threshold temperature, whereby an area of a contact, which exists between the heating element and the heat transfer element when the consumable is attached to the aerosol generation device and the temperature of the heating element is below the threshold temperature, can be reduced, or the contact can be eliminated.

2. The aerosol generation device according to the preceding claim, wherein the heating element is configured to be moved to be retracted from the heat transfer element, wherein the heating element is coupled to a support element that can be heated by the heating element.

3. The aerosol generation device according to the preceding claim, wherein the support element is configured to be deformed when the temperature of the heating element is at or above the threshold temperature whereby the heating element can be retracted from the heat transfer element.

4. The aerosol generation device according to the preceding claim, wherein the support element is configured to be elastically deformed when the temperature of the heating element is at or above the threshold temperature and to be substantially reset to its original shape when the temperature of the heating element is at a temperature below the threshold temperature.

5. The aerosol generation device according to the preceding claim, wherein the support element is configured to be shortened in one dimension when the temperature of the heating element is at or above the threshold temperature and to be substantially reset to its original length by being lengthened when the temperature of the heating element is below the threshold temperature.

6. The aerosol generation device according to any one of the preceding claims, wherein the support element comprises or substantially consists of a material that exhibits a thermostatic behaviour.

7. The aerosol generation device according to any one of claims 2 to 3, wherein the support element comprises or substantially consists of a shape memory alloy (SMA) and the threshold temperature corresponds to the transformation temperature of the SMA.

8. The aerosol generation device according to the preceding claim, wherein the support element is configured to be deformed when its temperature is at or above the transformation temperature such that the heating element can be retracted from the heat transfer element.

9. The aerosol generation device according to any one of claims 7 or 8, wherein the support element is configured to substantially remain in its deformed shaped once deformed even when its temperature is subsequently at a temperature below the transformation temperature.

10. The aerosol generation device according to any one of claim 4 or 5, wherein the support element comprises or substantially consists of a shape memory alloy (SMA) and the threshold temperature corresponds to the transformation temperature of the SMA.

11. The aerosol generation device according to the preceding claim, wherein the support element is configured to substantially be reset to its original shape when its temperature is subsequently at a temperature below the transformation temperature.

12. The aerosol generation device according to any one of claims 3 to 6, wherein the support element comprises or substantially consists of a bimetallic material, wherein the support element is configured to deform as a function of the temperature of the heating element such that at or above the threshold temperature, the heating element is retracted from the heat transfer element.

13. The aerosol generation device according to any one of claims 3 to 5,
wherein the heating element comprises or substantially consists of a magnetic material such that, when the heat transfer element of the consumable comprises or substantially consists of a magnetic material, an attractive magnetic force between the heating element and the heat transfer element may cause the contact between heating element and the heat transfer element to be established when the temperature of the heating element is below the threshold temperature.

14. The aerosol generation device according to the preceding claim, wherein the threshold temperature is the Curie temperature of the heating element, and the attractive magnetic force between the heating element and the heat transfer element is reduced or eliminated at or above the Curie temperature of the heating element such that the heating element is retracted from the heat transfer element.

15. An aerosol generation system comprising:
a consumable comprising an aerosol generation substrate and a heat transfer element configured for heating the aerosol generation substrate; and
an aerosol generation device according to any one of claims 1 to 14.

## Patentansprüche

1. Aerosolerzeugungsvorrichtung (200) zur Verwendung mit einem Verbrauchsmaterial (100), das ein Wärmeübertragungselement (110) zum Erwärmen eines Aerosolerzeugungssubstrats (140) umfasst und an der Aerosolerzeugungsvorrichtung anbringbar ist, die Aerosolerzeugungsvorrichtung umfassend:
ein Heizelement (210) zum Erwärmen des Wärmeübertragungselements des Verbrauchsmaterials, wenn das Verbrauchsmaterial an der Aerosolerzeugungsvorrichtung angebracht ist, **dadurch gekennzeichnet, dass**
das Heizelement relativ zu dem Wärmeübertragungselement beweglich ist, wenn das Verbrauchsmaterial an der Aerosolerzeugungsvorrichtung angebracht ist, und
konfiguriert ist, um bewegt zu werden, wenn seine Temperatur über einer Schwellentemperatur liegt, wodurch ein Bereich eines Kontakts, der zwischen dem Heizelement und dem Wärmeübertragungselement besteht, wenn das Verbrauchsmaterial an der Aerosolerzeugungsvorrichtung angebracht ist und die Temperatur des Heizelements unter der Schwellentemperatur liegt, verringert werden kann oder der Kontakt aufgehoben werden kann.

2. Aerosolerzeugungsvorrichtung nach dem vorhergehenden Anspruch, wobei das Heizelement konfiguriert ist, um bewegt zu werden, um von dem Wärmeübertragungselement zurückgezogen zu werden, wobei das Heizelement mit einem Stützelement gekoppelt ist, das durch das Heizelement erwärmt werden kann.

3. Aerosolerzeugungsvorrichtung nach dem vorhergehenden Anspruch, wobei das Stützelement konfiguriert ist, um verformt zu werden, wenn die Temperatur des Heizelements bei oder über der Schwellentemperatur liegt, wodurch das Heizelement von dem Wärmeübertragungselement zurückgezogen werden kann.

4. Aerosolerzeugungsvorrichtung nach dem vorhergehenden Anspruch, wobei das Stützelement konfiguriert ist, um elastisch verformt zu werden, wenn die Temperatur des Heizelements bei oder über der Schwellentemperatur liegt, und im Wesentlichen auf seine ursprüngliche Form zurückgesetzt zu werden, wenn die Temperatur des Heizelements bei einer Temperatur unter der Schwellentemperatur liegt.

5. Aerosolerzeugungsvorrichtung nach dem vorhergehenden Anspruch, wobei das Stützelement konfiguriert ist, um in einer Dimension verkürzt zu werden, wenn die Temperatur des Heizelements bei oder über der Schwellentemperatur liegt, und im Wesentlichen auf seine ursprüngliche Länge zurückgesetzt zu werden, indem es verlängert wird, wenn die Temperatur des Heizelements unter der Schwellentemperatur liegt.

6. Aerosolerzeugungsvorrichtung nach einem der vorhergehenden Ansprüche, wobei das Stützelement ein Material umfasst oder im Wesentlichen daraus besteht, das ein thermostatisches Verhalten zeigt.

7. Aerosolerzeugungsvorrichtung nach einem der Ansprüche 2 bis 3, wobei das Stützelement eine Formgedächtnislegierung (SMA) umfasst oder im Wesentlichen daraus besteht und die Schwellentemperatur der Umwandlungstemperatur der SMA entspricht.

8. Aerosolerzeugungsvorrichtung nach dem vorhergehenden Anspruch, wobei das Stützelement konfiguriert ist, um verformt zu werden, wenn seine Temperatur bei oder über der Umwandlungstemperatur liegt, so dass das Heizelement von dem Wärmeübertragungselement zurückgezogen werden kann.

9. Aerosolerzeugungsvorrichtung nach einem der Ansprüche 7 oder 8, wobei das Stützelement konfiguriert ist, um im Wesentlichen in seiner verformten Form zu bleiben, sobald es verformt ist, selbst wenn seine Temperatur anschließend bei einer Temperatur unter der Umwandlungstemperatur liegt.

10. Aerosolerzeugungsvorrichtung nach einem der Ansprüche 4 oder 5, wobei das Stützelement eine Formgedächtnislegierung (SMA) umfasst oder im Wesentlichen daraus besteht und die Schwellentemperatur der Umwandlungstemperatur der SMA entspricht.

11. Aerosolerzeugungsvorrichtung nach dem vorhergehenden Anspruch, wobei das Stützelement konfiguriert ist, um im Wesentlichen auf seine ursprüngliche Form zurückgesetzt zu werden, wenn seine Temperatur anschließend bei einer Temperatur unter der Umwandlungstemperatur liegt.

12. Aerosolerzeugungsvorrichtung nach einem der Ansprüche 3 bis 6, wobei das Stützelement ein Bimetallmaterial umfasst oder im Wesentlichen daraus besteht, wobei das Stützelement konfiguriert ist, um sich als eine Funktion der Temperatur des Heizelements zu verformen, so dass bei oder über der Schwellentemperatur das Heizelement von dem Wärmeübertragungselement zurückgezogen wird.

13. Aerosolerzeugungsvorrichtung nach einem der Ansprüche 3 bis 5,
wobei das Heizelement ein magnetisches Material umfasst oder im Wesentlichen daraus besteht, so dass, wenn das Wärmeübertragungselement des Verbrauchsmaterials ein magnetisches Material umfasst oder im Wesentlichen daraus besteht, eine anziehende magnetische Kraft zwischen dem Heizelement und dem Wärmeübertragungselement bewirken kann, dass der Kontakt zwischen dem Heizelement und dem Wärmeübertragungselement hergestellt wird, wenn die Temperatur des Heizelements unter der Schwellentemperatur liegt.

14. Aerosolerzeugungsvorrichtung nach dem vorhergehenden Anspruch, wobei die Schwellentemperatur die Curie-Temperatur des Heizelements ist und die anziehende magnetische Kraft zwischen dem Heizelement und dem Wärmeübertragungselement bei oder über der Curie-Temperatur des Heizelements reduziert oder eliminiert wird, so dass das Heizelement von dem Wärmeübertragungselement zurückgezogen wird.

15. Aerosolerzeugungssystem, umfassend:
ein Verbrauchsmaterial, das ein Aerosolerzeugungssubstrat und ein Wärmeübertragungselement umfasst, das zum Erwärmen des Aerosolerzeugungssubstrats konfiguriert ist; und
eine Aerosolerzeugungsvorrichtung nach einem der Ansprüche 1 bis 14.

## Revendications

1. Un dispositif de génération d'aérosol (200) destiné à être utilisé avec un consommable (100), qui comprend un élément de transfert de chaleur (110) pour chauffer un substrat de génération d'aérosol (140) et qui peut être assujetti au dispositif de génération d'aérosol, le dispositif de génération d'aérosol comprenant :
un élément chauffant (210) destiné à chauffer l'élément de transfert thermique du consommable lorsque le consommable est assujetti au dispositif de génération d'aérosol, **caractérisé en ce que** :
l'élément chauffant est mobile par rapport à l'élément de transfert de chaleur lorsque le consommable est assujetti au dispositif de génération d'aérosol, et
il est configuré pour être déplacé lorsque sa température est au-dessus d'un seuil de température, de manière à pouvoir réduire une surface d'un contact existant entre l'élément chauffant et l'élément de transfert de chaleur lorsque le consommable est assujetti au dispositif de génération d'aérosol et que la température de l'élément chauffant est au-dessous du seuil de température, ou à pouvoir éliminer le contact.

2. Le dispositif de génération d'aérosol selon la revendication précédente, dans lequel l'élément chauffant est configuré pour être déplacé de manière à être rétracté de l'élément de transfert de chaleur, l'élément chauffant étant couplé à un élément de support qui peut être chauffé par l'élément chauffant.

3. Le dispositif de génération d'aérosol selon la revendication précédente, dans lequel l'élément de support est configuré pour être déformé lorsque la température de l'élément chauffant est au seuil de température ou au-dessus, de manière à pouvoir rétracter l'élément chauffant de l'élément de transfert de chaleur.

4. Le dispositif de génération d'aérosol selon la revendication précédente, dans lequel l'élément de support est configuré de manière à être élastiquement déformé lorsque la température de l'élément chauffant est au seuil de température ou au-dessus, et à être sensiblement rendu à sa forme initiale lorsque la température de l'élément chauffant est à une température au-dessous du seuil de température.

5. Le dispositif de génération d'aérosol selon la revendication précédente, dans lequel l'élément de support est configuré de manière à être raccourci en une dimension lorsque la température de l'élément chauffant est au seuil de température ou au-dessus, et à être sensiblement rendu à sa longueur initiale en étant allongé lorsque la température de l'élément chauffant est au-dessous du seuil de température.

6. Le dispositif de génération d'aérosol selon l'une des revendications précédentes, dans lequel l'élément de support comprend, ou consiste sensiblement en, un matériau qui présente un comportement thermostatique.

7. Le dispositif de génération d'aérosol selon l'une des revendications 2 à 3, dans lequel l'élément de support comprend, ou consiste sensiblement en, un alliage à mémoire de forme (AMF), et le seuil de température correspond à la température de transformation de l'AMF.

8. Le dispositif de génération d'aérosol selon la revendication précédente, dans lequel l'élément de support est configuré de manière à être déformé lorsque sa température est à la température de transformation ou au-dessus, de sorte que l'élément chauffant puisse être rétracté de l'élément de transfert de chaleur.

9. Le dispositif de génération d'aérosol selon l'une des revendications 7 ou 8, dans lequel l'élément de support est configuré pour rester sensiblement dans sa conformation déformée une fois qu'il a été déformé, même si sa température se situe ultérieurement à une température au-dessous de la température de transformation.

10. Le dispositif de génération d'aérosol selon l'une des revendications 4 ou 5, dans lequel l'élément de support comprend, ou consiste sensiblement en, un alliage à mémoire de forme (AMF), et le seuil de température correspond à la température de transformation de l'AMF.

11. Le dispositif de génération d'aérosol selon la revendication précédente, dans lequel l'élément de support est configuré pour être sensiblement rendu à sa forme initiale lorsque la température se situe ultérieurement à une température au-dessous de la température de transformation.

12. Le dispositif de génération d'aérosol selon l'une des revendications 3 à 6, dans lequel l'élément de support comprend, ou est sensiblement constitué, d'un matériau bimétallique, l'élément de support étant configuré pour se déformer en fonction de la température de l'élément chauffant de telle sorte qu'au seuil de température, ou au-dessus, l'élément chauffant soit rétracté de l'élément de transfert de chaleur.

13. Le dispositif de génération d'aérosol selon l'une des revendications 3 à 5, dans lequel l'élément chauffant comprend, ou est sensiblement constitué, d'un matériau magnétique tel que, lorsque l'élément de transfert de chaleur du consommable comprend, ou est sensiblement constitué de, un matériau magnétique, une force magnétique d'attraction entre l'élément chauffant et l'élément de transfert de chaleur puisse faire en sorte d'établir le contact entre l'élément chauffant et l'élément de transfert de chaleur lorsque la température de l'élément chauffant est au-dessous du seuil de température.

14. Le dispositif de génération d'aérosol selon la revendication précédente, dans lequel le seuil de température est la température de Curie de l'élément chauffant, et la force magnétique d'attraction entre l'élément chauffant et l'élément de transfert de chaleur est réduite ou éliminée à la température de Curie ou au-dessus de l'élément chauffant de telle de manière à rétracter l'élément chauffant de l'élément de transfert de chaleur.

15. Un système de génération d'aérosol comprenant :
un consommable comprenant un substrat de génération d'aérosol et un élément de transfert de chaleur configuré pour chauffer le substrat de génération d'aérosol ; et
un dispositif de génération d'aérosol selon l'une des revendications 1 à 14.
